Europäisches Patentamt

European Patent Office

Office européen des brevets

(19)

(11) **EP 0 619 558 B1**

(12) **FASCICULE DE BREVET EUROPEEN**

(45) Date de publication et mention
de la délivrance du brevet:
**24.06.1998 Bulletin 1998/26**

(51) Int Cl.6: **G06F 15/80**

(21) Numéro de dépôt: **94200877.2**

(22) Date de dépôt: **30.03.1994**

(54) **Procédé et appareil de classification de configurations de signaux**

Verfahren und Vorrichtung zur Klassifizierung von Signalkonfigurationen

Method and apparatus for classifying signal configurations

(84) Etats contractants désignés:
**DE FR GB IT**

(30) Priorité: **07.04.1993 FR 9304135**

(43) Date de publication de la demande:
**12.10.1994 Bulletin 1994/41**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB IT**

(72) Inventeurs:
- **Nadal, Jean-Pierre**
  **F-75008 Paris (FR)**
- **d'Alche-Buc, Florence**
  **F-75008 Paris (FR)**
- **Zwierski, Didier**
  **F-75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 446 084**

- **NETWORK: COMPUTATION IN NEURAL SYSTEMS, vol.1, no.4, Octobre 1990, BRISTOL GB pages 423 - 438 SIRAT ET AL 'Neural Trees: a new tool for classification'**
- **IEEE TRANSACTIONS ON COMPUTERS, vol.42, no.3, Mars 1993, NEW YORK US pages 291 - 299 SANKAR ET AL 'Growing and Pruning Neural Tree Networks'**
- **PROCEEDINGS OF THE IEEE, vol.78, no.10, Octobre 1990, NEW YORK US pages 1605 - 1613 SETHI 'Entropy Nets: From Decision Trees to Neural Networks'**

**Description**

L'invention concerne un procédé de classification de configurations de signaux par dichotomies successives. Le procédé peut être utilisé pour des classifications de configurations de signaux pour la reconnaissance de caractères, de phonèmes ou autres.

On connaît le document EP 446 084 qui décrit un réseau de neurones à structure hiérarchisée destiné à effectuer une classification de données réparties sur plusieurs classes. Un tel réseau de neurones est préalablement construit en mettant en oeuvre des étapes d'apprentissage opérées sur des groupes d'exemples. Cet apprentissage consiste à former le réseau de neurones pour effectuer correctement des distinctions en classes homogènes. Ceci a pour but de définir à la fois le nombre de neurones, leurs positions dans la structure en arbre, et les coefficients synaptiques de chaque neurone. Le procédé consiste à distinguer, dans le groupe d'exemples initial, à partir d'un neurone père, deux sous-groupes en satisfaisant un critère de distinction prédéterminé. Lorsqu'un sous-groupe renferme une classe d'exemples qui n'est pas homogène, un nouveau neurone est alors introduit pour générer à son tour de nouveaux sous-groupes et les mêmes étapes sont reproduites. L'apprentissage est terminé par l'adjonction d'assez de neurones (avec le calcul de leurs coefficients synaptiques) pour que toutes les classes appartenant au groupe d'exemples initial aient été distinguées ou pour que l'on détermine une distinction de classes avec une homogénéité attendue, c'est-à-dire avec un taux acceptable d'erreurs ou avec une erreur globale acceptable.

Une première limitation d'un tel algorithme est qu'il est bien adapté pour opérer des classifications avec des neurones ayant des sorties binaires. Il ne s'applique pas au cas où les neurones ont des sorties analogiques.

Une autre limitation est qu'en utilisant une succession de séparateurs linéaires, un tel procédé, en réalisant un apprentissage local pour chaque neurone, peut conduire à des structures arborescentes de grande profondeur suboptimale. L'appareil de classification ainsi formé ne possède pas de ce fait une structure optimale. Ceci peut conduire à des durées élevées de traitement et à des besoins élevés en place mémoire.

Le but de l'invention consiste à définir une structure hiérarchisée compacte de moyens de classification, la structure ayant un temps de traitement court et pouvant s'adapter au plus juste aux configurations de signaux à traiter.

Ce but est atteint en mettant en oeuvre un procédé de classification qui comprend une phase de structuration d'un appareil de classification. Cette structuration de l'appareil est mise en oeuvre au cours d'une phase d'apprentissage conduite sur un lot d'exemples de configurations de signaux, lesdits exemples étant classifiés par un trio de moyens de classification ou une combinaison de plusieurs trios de moyens de classification, ledit trio ou chacun desdits trios étant formé d'un premier moyen de séparation binaire suivi de deux seconds moyens de classification, ledit premier moyen distribuant des configurations de signaux vers des seconds moyens de classification, la phase d'apprentissage comprenant les étapes suivantes :

A - pour ledit trio ou chacun desdits trio, calculer interactivement des paramètres adaptatifs respectifs dudit premier moyen et desdits seconds moyens pour tendre à distinguer, en sortie desdits seconds moyens, respectivement deux classifications en minimisant un critère d'erreurs,

B - et lorsqu'un au moins desdits seconds moyens ne fournit pas une classification avec une homogénéité attendue, figer les paramètres du premier moyen et remplacer chaque second moyen ne fournissant pas une classification homogène par un trio additionnel de moyens de classification,

C - répéter les étapes précédentes pour chaque trio additionel jusqu'à ce que tous les seconds moyens de classification délivrent des classifications respectives ayant les homogénéités attendues,

D - figer les paramètres respectifs de tous les trios de moyens de classification.

Plus particulièrement, le procédé peut être appliqué conjointement à deux trios de moyens de classification, les deux premiers moyens de séparation binaire étant précédés par un moyen préliminaire de séparation binaire pour distribuer les configurations de signaux aux deux dits premiers moyens, ledit moyen préliminaire étant muni de paramètres adaptatifs, la phase d'apprentissage étant conduite globalement sur lesdits deux trios et sur le moyen préliminaire pour tendre à distinguer, en sortie desdits seconds moyens, des classifications ayant des homogénéités attendues par adaptation des paramètres adaptatifs.

Ainsi avantageusement la profondeur de la structure arborescente est plus faible que dans la technique antérieure. Il s'ensuit que le traitement effectué avec un tel appareil structuré par un tel procédé est beaucoup plus rapide qu'avec des classificateurs connus à structure arborescente.

En effet, on fait dépendre le résultat fourni par un séparateur binaire des caractéristiques des moyens de classification situés immédiatement après, alors que jusqu'à ce jour ces opérations étaient disjointes. Pour cela, on adapte en conséquence les caractéristiques du séparateur binaire et celles des moyens de classification situés en aval.

Un tel appareil de classification est particulièrement utile pour distinguer des configurations voisines de signaux très difficiles à distinguer. Ainsi, par exemple, des lettres manuscrites d'aspect très proche comme un S et un 5 ou un 9 et un g peuvent être distinguées avec des moyens réduits.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : une représentation d'un arbre de neurones selon la technique connue.

Figure 2 : deux organigrammes se rapportant l'un à la phase d'apprentissage et l'autre à la phase de résolution pour un trio de moyens de classification selon l'invention.

Figure 3 : un schéma (A) d'un moyen de séparation binaire et une courbe (B) représentant l'allure de la fonction de sortie du séparateur binaire selon l'invention au cours de la phase d'apprentissage.

Figure 4 : un organigramme concernant le greffage d'un second trio sur un premier trio au cours de la procédure d'apprentissage selon l'invention concernant une combinaison de trios.

Figure 5 : un organigramme concernant l'apprentissage d'une autre combinaison de trios selon l'invention.

Figure 6 : une représentation d'un exemple de classification d'un groupe formé de deux classes et un schéma de la structure en arbre qui s'y rapporte.

Figure 7 : un schéma-bloc d'un appareil de classification mettant en oeuvre le procédé d'apprentissage de l'invention.

Figure 8 : un schéma d'un mode d'organisation d'un appareil de classification.

Figure 9 : une représentation d'un exemple de structure en arbre d'un appareil de classification.

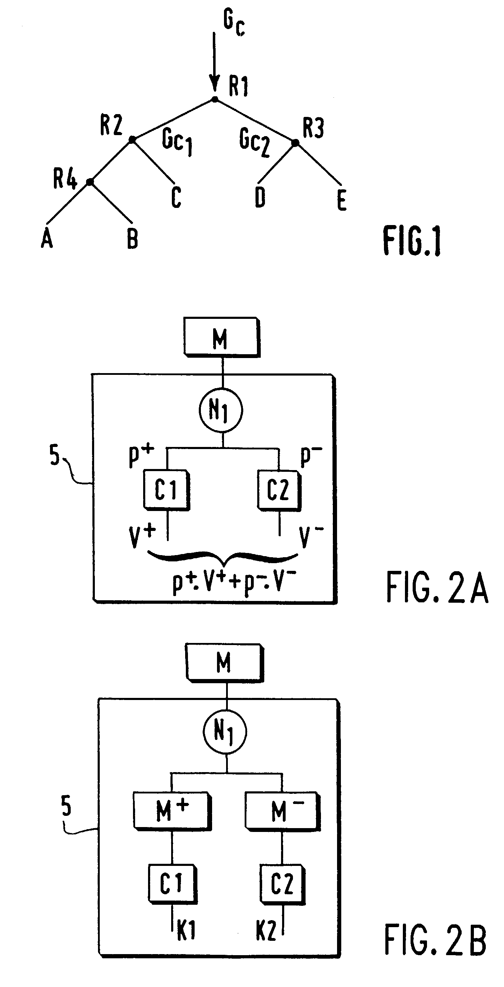

La figure 1 représente un arbre de neurones connu formé de quatre neurones R1, R2, R3 et R4. Le premier neurone R1 reçoit en entrée un groupe multiclasses Gc de configurations de signaux. Selon l'art antérieur, le neurone R1 distingue dans le groupe Gc deux sous-groupes Gc1 et Gc2 à partir d'un critère prédéterminé de sélection. Ce critère concerne une distinction de une ou plusieurs classes parmi l'ensemble des multiclasses. Ensuite les sous-groupes Gc1 et Gc2 sont examinés pour déterminer s'ils renferment respectivement une seule classe de configurations. Si les réponses sont négatives (cas de la figure 1), deux neurones supplémentaires R2 et R3 sont utilisés pour distinguer respectivement dans les sous-groupes Gc1 et Gc2 des classes homogènes. Les mêmes mécanismes sont réitérés jusqu'à l'obtention de classes homogènes par exemple les classes A, B, C, D, E sur la figure 1.

On observe ainsi qu'un neurone successeur intervient lorsqu'un neurone donné n'a pas réussi à constituer un sous-groupe renfermant une classe homogène. Selon cet art antérieur, il n'y a donc pas d'interactivité entre les apprentissages de deux neurones successifs.

Au contraire, l'invention met en oeuvre une procédure interactive d'apprentissage opérant sur un trio de neurones ou plus généralement sur un moyen de séparation binaire (par exemple un neurone) et deux classificateurs. Les types de classificateurs sont choisis selon les classifications à effectuer soit au début de la phase d'apprentissage soit lorsque l'on greffe une nouvelle cellule trio. La figure 2-A représente un trio 5 formé d'un neurone N1 et de deux classificateurs C1 et C2. Le neurone distribue des configurations de signaux contenues dans un groupe M de configurations de signaux.

Lorsque l'apprentissage (décrit ci-après) du neurone N1 est terminé et que ses paramètres sont figés, le neurone agit en séparateur linéaire dans l'espace des entrées (figure 2-B), c'est-à-dire qu'il distingue une première classe d'une seconde classe par un séparateur linéaire. Ceci est à distinguer du fait que la décision prise par le neurone N1 est non linéaire due à la réponse non linéaire reliant ses entrées à sa sortie.

Lorsque les configurations d'entrée sont dans un espace à deux dimensions, un séparateur linéaire est une droite. Il devient un hyperplan dans un espace à n dimensions.

Au cours de l'apprentissage du trio, l'idée de base est de faire l'apprentissage d'un neurone quelconque de l'arbre en tenant compte du fait que ce neurone aura deux fils, par exemple deux classificateurs C1 et C2 sur la figure 2-A. L'apprentissage porte ainsi non seulement sur le neurone N1 mais aussi sur les deux classificateurs C1 et C2.

Considérons le cas de la figure 2-A où l'arbre a une profondeur égale à 2 et considérons un apprentissage supervisé. Un tel type d'apprentissage consiste à rechercher un résultat prédéterminé. On mesure ainsi une erreur entre le résultat obtenu en sortie du trio et un résultat attendu. Au cours de la phase d'apprentissage, on impose au neurone N1 de présenter une réponse propre entrée/sortie variant de manière continue et non pas fortement non linéaire (à seuil) comme dans le cas d'un neurone classique.

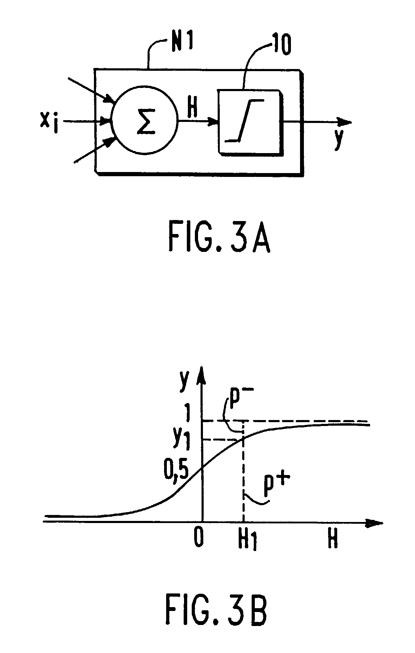

Un neurone N1 est formé d'un sommateur $\Sigma$, qui délivre un potentiel neuronal H, suivi d'un organe non linéaire 10 qui délivre un état de neurone y (figure 3-A). La réponse de l'organe non linéaire 10 est par exemple représentée sur la figure 3-B. Elle s'écrit, pour cet exemple :

$$y = \frac{1}{1 + e^{-H/T}}$$

où T est un paramètre non nul en cours de la phase d'apprentissage appelé température. Ainsi, par exemple pour une valeur $H = H_1$, on obtient en sortie $y = y_1$ qui constitue une probabilité $p^+$ que la sortie du neurone N1 délivre un classement par exemple "1" et, par voie de conséquence, la sortie du neurone N1 délivre un classement "O" avec une probabilité $p^- = 1 - p^+$. Au résultat délivré est donc associée une probabilité correspondante.

Ainsi sur la figure 2-A, le neurone N1 distingue des configurations de signaux ayant des probabilités $p^+$ et $p^-$. Les classifications sont traitées respectivement par les classificateurs-fils C1 et C2 qui délivrent respectivement des résultats $V^+$ et $V^-$. Ainsi une configuration particulière de signaux aura la probabilité $p^+$ d'être traitée par C1 et la probabilité $p^-$ d'être traitée par C2. Globalement pour le trio N1, C1, C2, on définit un résultat global :

$$V = p^+ . V^+ + p^- . V^-$$

Il s'analyse comme la somme des taux de réussite $p^+.V^+$ et $p^- .V^-$ concernant chaque classificateur.

La procédure d'apprentissage d'un trio se déroule de la manière suivante.

Soit en entrée du neurone N1 une configuration de signaux représentée par un vecteur d'entrée $S_i$ $(i = 0,...n)$ .

En sortie de N1 on a une probabilité $p^+$ de réponse 1 et une probabilité $p^-$ de réponse 0 avec :

$$p^+ = f\left(\sum_{j=o}^{n} W_j^N . S_j\right) \ et \ p^- = 1 - p^+ = f\left(-\sum_{j=o}^{n} W_j^N . S_j\right)$$

avec $f(x) = 1/(1 + e^{-2x})$ lorsque, par exemple, T = 1/2,

et où x est une variable courante.

Les classificateurs fils vont délivrer des résultats $V^+$ et $V^-$ tels que :

$$V^- = g\left(\sum_{j=O}^{n} W_j^L \ S_j\right) \ et \ V^+ = g\left(\sum_{j=O}^{n} W_j^R . S_j\right)$$

où L et R sont les nombres d'entrées des classificateurs fils.

D'autres classificateurs, donc d'autres fonctions que celles indiquées ci-dessus, peuvent être mis en oeuvre, par exemple des classificateurs à fonction de base radiale, des classificateurs aux plus proches voisins, des classificateurs à fonctions d'approximation.

La fonction g doit être une fonction dérivable par exemple une fonction sigmoïde.

Le résultat global V est alors :

$$V = p^+ . V^+ + p^- . V^-$$

Avec un apprentissage supervisé pour lequel on désire obtenir un résultat attendu Vd, on calcule une erreur par exemple une erreur quadratique $E = 1/2 |V-Vd|^2$ que l'on minimise par un procédé connu par exemple par un procédé de descente en gradient de l'erreur.

Le résultat obtenu est comparé au résultat attendu et les paramètres du premier moyen et des seconds moyens de classification sont adaptés pour tendre vers le résultat attendu. Les paramètres à adapter sont notamment les coefficients synaptiques du neurone N1, le seuil de la fonction non linéaire (figure 3-A), éventuellement la température de la fonction non linéaire, et les paramètres des classificateurs C1 et C2. En particulier, il peut être avantageux de diminuer progressivement ladite température au cours de l'apprentissage.

Considérons le cas simple où un unique trio de moyens de classification suffit pour obtenir des classifications avec des homogénéités attendues. Dans ce cas, en fin d'apprentissage, on fige les paramètres des moyens de classification pour que ledit trio soit alors complètement déterminé pour effectuer des tâches ultérieures de résolution. La figure 2-B représente une telle situation. Dans ce cas, la température T de la fonction non linéaire d'activation du neurone N1 est mise à une valeur nulle et le neurone N1 opère alors des décisions à seuil. Le lot M de configurations de signaux est alors distribué en deux groupes M+ et M- vers les classificateurs C1 et C2 qui effectuent les classifications K1 et K2 qu'ils ont apprises à effectuer.

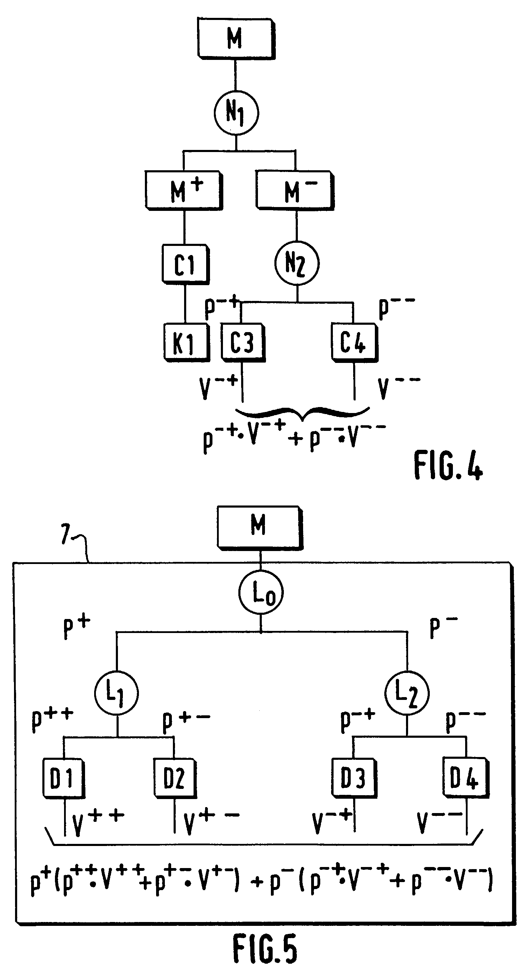

Lorsqu'un unique trio de moyens de classification ne suffit pas à délivrer les classifications attendues, selon l'invention on remplace le classificateur défaillant par un trio additionnel de moyens de classification. A titre d'exemple (figure 4) supposons qu'après apprentissage la classification K1, délivrée par le classificateur C1, soit satisfaisante et que la classification délivrée par le classificateur C2 soit insuffisante (figure 2-A). Dans ce cas, les coefficients synaptiques du neurone N1 et les paramètres du classificateur C1 sont figés dans l'état atteint en fin d'apprentissage. La température T caractérisant l'organe non linéaire 10 du neurone N1 est mise à une valeur nulle de sorte que la décision prise par le neurone N1 devienne une décision à seuil. Le classificateur C2 est alors remplacé par un trio formé d'un neurone N2 et de deux classificateurs C3 et C4 (figure 4). Le neurone N2 opère une distinction de classes sur le sous-groupe $M^-$ tel qu'il a été obtenu par la procédure d'apprentissage opérée précédemment.

Le neurone N2 agit de la même manière que précédemment, avec une probabilité $p^{-+}$ et une probabilité $p^{--} = 1-p^{-+}$ affectée pour chaque configuration de signaux associée aux classificateurs C3 et C4. La même procédure d'apprentissage que celle déjà décrite pour le trio précédent se déroule pour le trio N2, C3, C4.

D'une manière générale, les paramètres caractérisant un trio sont figés en fin de l'étape d'apprentissage qui le concerne pour les éléments qui ne sont pas défaillants. Le procédé selon l'invention opère ainsi par apprentissage d'un premier trio, fixation des paramètres du premier trio, remplacement du classificateur déficient par un trio additionnel et ainsi de suite jusqu'à l'obtention de classifications à homogénéité attendue.

Les classificateurs C peuvent être des classificateurs de complexité quelconque, pouvant être des neurones ou des classificateurs élaborés tels que des réseaux de neurones multicouches, des classificateurs à fonction à base radiale, des classificateurs aux plus proches voisins ou autres. On peut utiliser des classificateurs à fonctions d'approximation linéaires, polynomiales ou autres, pour construire un appareil de classification qui peut réaliser des approximations de fonctions quelconques.

L'invention vient d'être décrite dans le cas où l'apprentissage est réalisé à partir d'un premier trio et en effectuant une combinaison de trios, par greffage d'un trio additionnel d'abord sur ce premier trio puis sur d'autres trios lorsqu'un trio s'avère être partiellement insuffisant. Il est également possible de réaliser l'apprentissage en partant d'un couple de trios qui est précédé d'un moyen préliminaire de séparation binaire. La figure 5 représente ainsi le cas où l'apprentissage est réalisé conjointement non pas sur trois éléments (N1, C1, C2), mais sur sept éléments (L0, L1, L2, D1, D2, D3, D4). Le séparateur binaire préliminaire L0 fournit, pour chaque configuration, une classification avec des probabilités $p^+$ et $p^-$ comme cela a été décrit précédemment. Pour chaque trio du couple de trios, on a des probabilités :

$p^{++}$ et $p^{+-}$ pour le premier trio
$p^{-+}$ et $p^{--}$ pour le second trio.

On examine alors un résultat global :

$$V = p^+ \, (p^{++} . V^{++} + p^{+-} . V^{+-}) + p^- \, (p^{-+} . V^{-+} + p^{--} . V^{--})$$

Les mêmes mécanismes d'adaptation que ceux déjà décrits sont mis en oeuvre à la différence qu'ils s'appliquent aux sept éléments conjointement au lieu de trois éléments. Les mêmes étapes de greffage par trios élémentaires successifs ou par couples successifs de trios peuvent être effectués. Les mêmes mécanismes pour figer les paramètres des trios sont appliqués.

On peut sélectionner les caractéristiques des classificateurs à utiliser (par exemple leur type, leur nombre d'entrées ou autres) au fur et à mesure du greffage des trios additionnels. Ainsi, par exemple, le nombre d'entrées des classificateurs peut varier avec leur disposition plus ou moins profonde dans la structure en arbre ainsi formée.

Lorsque l'appareil de classification a appris à réaliser des classificiations, il peut alors être utilisé (mode de résolution) sur des lots d'exemples à classifier. A titre d'exemple, considérons un groupe de configurations de signaux renfermant deux classes qui sont à distinguer l'une de l'autre. Il peut s'agir de la reconnaissance dynamique de caractères manuscrits. Une configuration de signaux est représentée par un vecteur S à d dimensions auquel est associée une classe. Une configuration de signaux, concernant par exemple un caractère manuscrit, contient à un instant t des coordonnés $x(t)$, $y(t)$ d'un point d'écriture sur une tablette d'entrée de coordonnées (non représentée). Une autre coordonnée $z(t)$ indique la pression appliquée sur la tablette par un stylo d'écriture. Les configurations de signaux à classifier sont ainsi constituées d'une suite de coordonnées prélevées au cours du temps : $S = x(1), y(1), z(1), x(2), y(2), z(2)\ldots x(k), y(k), z(k)\ldots$

Le problème posé consiste à isoler, dans l'espace des entrées renfermant S, des zones appartenant à une même classe.

Pour permettre une représentation plus commode avec un dessin à deux dimensions, considérons que le vecteur S d'entrée est à 2 dimensions et qu'il s'agit d'un problème à deux classes. Un séparateur linéaire est alors une droite.

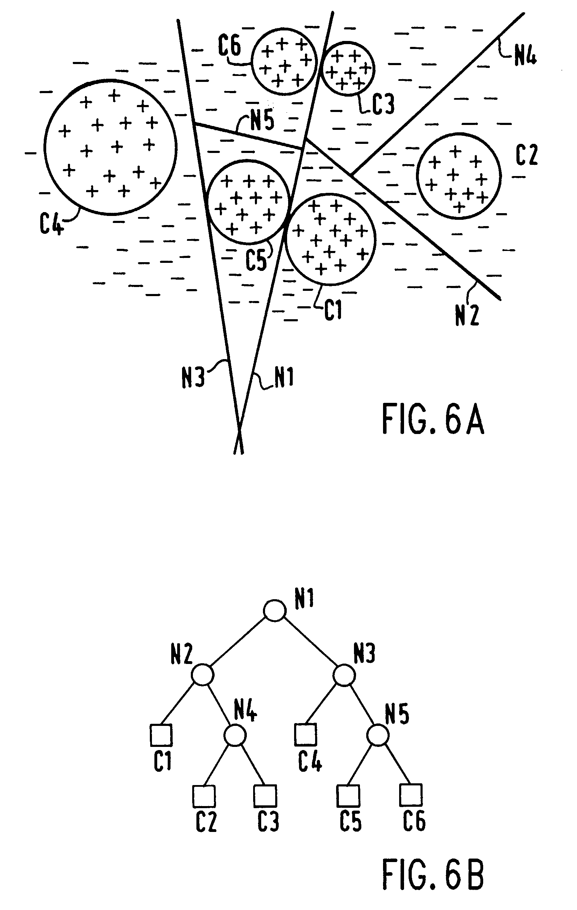

Sur la figure 6-A, les deux classes sont indiquées par des repères + et -. La figure 6-B représente l'arbre de moyens de classification qui est déterminé par l'invention. Après l'apprentissage, l'appareil de classification comprend des séparateurs binaires formés par les neurones N1, N2, N3, N4, N5 et des classificateurs à fonction à base radiale (RBF) formés par les classificateurs C1, C2, C3, C4, C5, C6. Du fait de l'invention, les neurones distinguent avec une grande précision les zones qui sont du ressort de chaque classificateur grâce au fait que les caractéristiques de chaque séparateur binaire sont adaptés soit au séparateur binaire suivant soit aux deux moyens de classification qui l'accompagnent. Le procédé selon l'invention permet, par exemple, au neurone N4 de bien délimiter les zones d'action des classificateurs C2 et C3 (figure 6-A). De même pour les autres neurones. Si on compare avec la structure en arbre de neurones de l'art antérieur, le procédé de construction de cet arbre aurait placé des séparateurs à l'intérieur des zones qui sont affectées aux classificateurs terminaux.

Ainsi grâce à l'invention, la profondeur de l'arbre est limitée et on évite ainsi d'avoir à effectuer des séquences superfétatoires d'apprentissage.

Pour démontrer les performances accrues obtenues par l'appareil conçu d'après le procédé, des comparaisons ont été menées pour distinguer la lettre S du chiffre 5 dans des écritures manuscrites. Cette distinction est particulièrement difficile. Pour cela on a testé un groupe de 416 exemples se rapportant aux lettres de l'alphabet et aux chiffres 0-9 tels qu'ils sont écrits par plusieurs personnes avec chaque personne écrivant plusieurs fois la même lettre ou chiffre. Une première comparaison a été faite en considérant une structure de classificateurs formée par autant de classificateurs RBF qu'il y avait d'exemples dans la base de données d'apprentissage. En testant un autre lot de 416 exemples, le taux de reconnaissance a été de 79 %.

Avec la même base d'exemples, à l'aide du procédé décrit, on a structuré un appareil de classification formé de 4 neurones (hyperplans) et 5 classificateurs RBF. Le taux de reconnaissance sur le même autre lot de 416 exemples a été de 86 %. Une autre comparaison des taux de reconnaissance obtenus avec l'appareil de classification selon l'invention et avec un appareil de classification structuré en arbre de neurones selon l'art connu a été menée sur un autre lot de 180 exemples de caractères manuscrits.

Les résultats obtenus sont indiqués dans le tableau I.

TABLEAU I

| Type d'arbre | Profondeur moyenne | Taux de reconnaissance |
|---|---|---|
| Arbre de neurones (art antérieur) | 4,1 | 87,2 % |
| Arbre de neurones (invention) | 3,7 | 91,1 % |
| Arbre de neurones + classificateurs (invention) | 3,2 | 93,9 % |

On observe que l'invention apporte une amélioration substantielle aussi bien sur la profondeur moyenne de l'arbre que sur le taux de reconnaissance atteint. Les résultats obtenus sont particulièrement performants lorsque les premiers moyens de séparation binaire sont des neurones et que les seconds moyens de classification sont des classificateurs RBF.

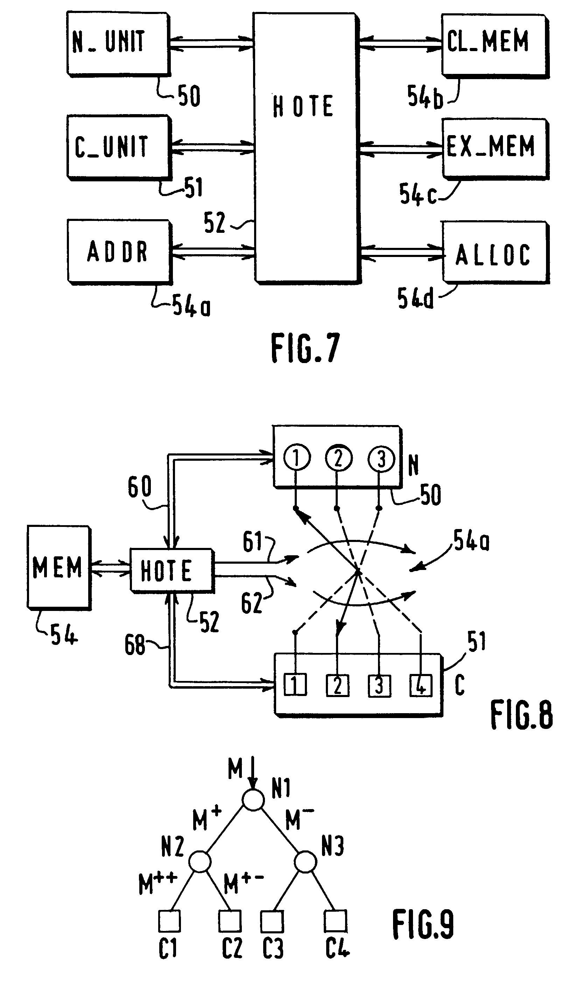

L'invention concerne également un appareil de classification de configurations de signaux dont une représentation schématique est fournie par la figure 7. Il comprend une unité de calcul 50 N-UNIT qui effectue les calculs mettant en oeuvre les neurones qui effectuent les séparations binaires, et une autre unité de calcul 51 C-UNIT qui effectue les calculs mettant en oeuvre les seconds moyens de classification par exemple des classificateurs à fonction à base radiale et/ou des classificateurs aux plus proches voisins et/ou d'autres classificateurs.

L'unité de calcul 50 détermine les états de sortie $S_i$ des neurones à partir de vecteurs d'entrée $S_j$ tel que :

$$S_i = \Sigma \; C_{ij} \cdot S_j$$

où $C_{ij}$ sont des coefficients synaptiques qui établissent la force de la connexion entre un neurone i et les bornes d'entrée où apparaissent les configurations de signaux correspondant à l'exemple à traiter par le neurone i (voir EP 446 084). Cette unité de calcul 50 opère selon des mécanismes connus de l'homme du métier tels que décrits par exemple dans EP 0 322 966.

Un calculateur 52 HOTE effectue les traitements, mis en oeuvre par le procédé décrit, autres que ceux effectués par les unités de calcul 50 et 51. Notamment, le calculateur hôte calcule les probabilités, les résultats globaux V et effectue les mises à jour des coefficients synaptiques et des paramètres des classificateurs.

Le calculateur hôte 52 opère interactivement avec les unités de calcul 50 et 51 pour mettre en oeuvre le procédé de classification décrit précédemment. Ainsi sont identifiés successivement des neurones et des classificateurs ainsi que les classifications qu'ils réalisent. Une mémoire d'adresses 54a ADDR contient les adresses de l'organe successeur (neurone ou classificateur) selon la classification obtenue.

Au cours de la phase d'apprentissage proprement dite, les neurones et les classificateurs sont créés et leur ordre de succession est chargé dans la mémoire 54a ADDR. Les classifications effectuées par les classificateurs sont identifiées et les identifications stockées dans une mémoire de classes 54b CL-MEM. Les groupes d'exemples sont chargés dans une mémoire d'exemples 54c EX-MEM et une mémoire 54d ALLOC d'allocation d'exemples permet de sélectionner les sous-groupes d'exemples qui doivent être traités par un neurone ou un classificateur déterminé.

Dans sa forme la plus générale, l'appareil de classification selon l'invention est conçu pour pouvoir s'adapter à des tâches diverses de classification de configurations de signaux. Pour cela, il est donc dimensionné pour pouvoir traiter différentes tâches. Le calculateur hôte 52 et les unités précitées sont programmés pour mettre en oeuvre le procédé d'apprentissage de l'invention. On structure ainsi l'appareil pour l'adapter à la tâche prévue. Il est ensuite utilisé au cours de phases ultérieures d'utilisations pour classifier des configurations de signaux. Il est aussi possible que l'appareil soit initialement préprogrammé en mettant en oeuvre le procédé d'apprentissage, l'appareil étant dans ce cas prévu pour effectuer seulement les tâches d'exploitation.

Le procédé et l'appareil de classification peuvent être utilisés pour classifier des caractères manuscrits, des phonèmes ou autres configurations de signaux.

La figure 8 représente un mode d'organisation de l'appareil de classification. L'unité 50 est représentée sous forme d'une batterie de neurones et l'unité 51 est représentée sous forme d'une batterie de classificateurs. Chaque neurone de la batterie de neurones et chaque classificateur de la batterie de classificateurs peuvent être sélectionnés individuellement à travers un adressage représenté symboliquement par le moyen d'adressage 54a. Celui-ci est piloté par le calculateur hôte 52 à l'aide d'un premier signal de commande 61, qui permet de sélectionner un des neurones et à l'aide d'un second signal de commande 62 qui permet de sélectionner le classificateur qui doit succéder au neurone sélectionné. Il peut aussi apparaître des situations où le premier signal de commande 61 sélectionne d'abord un premier neurone puis un second neurone et éventuellement d'autres neurones si la procédure d'apprentissage le nécessite comme cela a été décrit précédemment.

Deux bus de données 68, 60 permettent de gérer les distributions des configurations de signaux vers respectivement la batterie de classificateurs et vers la batterie de neurones. Les configurations de signaux faisant l'objet d'une classification ainsi que les adresses sont placés dans la mémoire 54.

A titre d'exemple, on a représenté sur la figure 9 une structure en arbre formée de trois neurones N1, N2, N3 et de quatre classificateurs C1, C2, C3, C4, structure déterminée lors de l'apprentissage pour traiter la classification d'un lot d'exemples fournis. Lors de l'étape d'exploitation, cette structure est utilisée pour classifier d'autres lots de configuration de signaux se rapportant au même problème de classification.

Le calculateur hôte 52 oriente donc la totalité du lot M de configurations de signaux vers le neurone N1 qui distingue deux groupes $M^+$ et $M^-$. Le neurone N2 est alors adress`8e  et les configurations du groupe $M^+$ sont soumises à son action par le calculateur hôte 52. Celui-ci adresse ensuite les classificateurs C1 et C2 qui succèdent au neurone N1 et leur soumet des configurations de signaux $M^{++}$ et $M^{+-}$ distinguées par le neurone N2. Des traitements analogues sont réalisés sur l'autre branche de l'arbre.

## Revendications

1. Procédé de classification de configurations de signaux par dichotomies successives comprenant une phase d'apprentissage conduite sur un lot d'exemples de configurations de signaux, lesdits exemples étant classifiés par un trio de moyens de classification ou une combinaison de plusieurs trios de moyens de classification, ledit trio ou chacun desdits trios étant formé d'un premier moyen (N1 -N5) de séparation binaire suivi de deux seconds moyens (C1 - C6) de classification, ledit premier moyen distribuant des configurations de signaux vers les seconds moyens de classification, la phase d'apprentissage comprenant les étapes suivantes :

   A - pour ledit trio ou chacun desdits trio, calculer interactivement des paramètres adaptatifs respectifs dudit premier moyen et desdits seconds moyens pour tendre à distinguer, en sortie desdits seconds moyens, respectivement deux classifications en minimisant un critère d'erreurs,
   B - et lorsqu'un au moins desdits seconds moyens ne fournit pas une classification avec une homogénéité attendue, figer les paramètres du premier moyen et remplacer chaque second moyen ne fournissant pas une classification homogène par un trio additionnel de moyens de classification,
   C - répéter les étapes précédentes pour chaque trio additionel jusqu'à ce que tous les seconds moyens de classification délivrent des classifications respectives ayant les homogénéités attendues,
   D - figer les paramètres respectifs de tous les trios de moyens de classification.

2. Procédé selon la revendication 1 caractérisé en ce que pour calculer interactivement les paramètres adaptatifs d'undit trio, le procédé comprend les étapes suivantes :

- pour chaque premier moyen, à chaque configuration de signaux, estimer une probabilité concernant un des classements binaires et une probabilité complémentaire concernant l'autre classement binaire,
- pour chaque second moyen, à chaque configuration de signaux, calculer un taux de réussite reliant un résultat délivré par ledit second moyen et la probabilité le concernant,
- calculer un résultat global pour le trio groupant les taux de réussite des deux seconds moyens de classification,
- comparer le résultat global du trio avec un résultat global à homogénéité attendue et déterminer une erreur mesurant des écarts issus de cette comparaison,
- minimiser l'erreur en modifiant les paramètres adaptatifs des premiers moyens et ceux des seconds moyens sur la totalité du lot d'exemples.

3. Procédé selon une des revendications 1 ou 2 caractérisé en ce que le procédé est appliqué conjointement à deux trios (L1, D1, D2) (L2, D3, D4) de moyens de classification, les deux premiers moyens (L1, L2) de séparation binaire étant précédés par un moyen préliminaire (L0) de séparation binaire pour distribuer les configurations de signaux aux deux dits premiers moyens, ledit moyen préliminaire étant muni de paramètres adaptatifs, la phase d'apprentissage étant conduite globalement sur lesdits deux trios et sur le moyen préliminaire pour tendre à distinguer, en sortie desdits seconds moyens, des classifications ayant des homogénéités attendues par adaptation des paramètres adaptatifs.

4. Procédé selon la revendication 1, caractérisé en ce que les premiers moyens de séparation binaire sont des neurones.

5. Procédé selon la revendication 1, caractérisé en ce que les seconds moyens de classification sont des classificateurs à fonction à base radiale, des classificateurs aux plus proches voisins, ou des classificateurs à fonctions d'approximation.

**Patentansprüche**

1. Verfahren zur Klassifizierung von Signalmustern durch aufeinanderfolgende Dichotomien mit einer Lernphase, die auf eine menge von Signalmustern angewandt wird, wobei diese Beispiele durch ein Trio von Klassifizierungsmitteln oder durch eine Kombination verschiedener Trios von Klassifizierungsmitteln klassifiziert werden, wobei dieses Trio oder jedes der genannten Trios durch ein erstes binäres Trennmittel (N1 - N5) geformt wird, dem zwei zweite Klassifizierungsmittel (C1 - C6) folgen, wobei die genannten ersten Mittel Signalmuster über die zweiten Klassifizierungsmittel verteilen, wobei die Lernphase die nachfolgende Schritte umfaßt:

A- interaktive Berechnung für das genannte Trio oder für jedes genannte Trio der betreffenden adaptiven Parameter der genannten ersten Mittel und der genannten zweiten Mittel um an dem Ausgang der genannten zweiten Mittel zwei betreffende Klassifizierungen zu unterscheiden durch Minimierung eines Fehlerkriteriums,
B- Gefrierung der Parameter der ersten Mittel wenn wenigstens eines der genannten zweiten Mittel keine Klassifizierung mit einer erwarteten Homogenität liefert, und Ersatz jedes zweiten Mittels, das keine homogene Klassifizierung ergibt durch ein zusätzliches Trio von Klassifizierungsmitteln,
C- Wiederholung der obengenannten Schritte für jedes zusätzliche Trio, bis alle zweiten Klassifizierungsmittel betreffende Klassifizierungen mit der erwarteten Homogenitäten liefern,
D- Gefrierung der betreffenden Parameter aller Trios von Klassifizierungsmitteln.

2. Verfahren nach Anspruch 1, dadurch gekennzeichnet, daß für die interaktive Berechnung der adaptiven Parameter des genannten Trios das Verfahren die nachfolgenden Verfahrensschritte aufweist:

- das Schätzen, für jedes erste Mittel und für jedes Signaimuster, einer Wahrscheinlichkeit in Bezug auf eine der binaren Klassifizierungen und einer komplementären Wahrscheinlichkeit in Bezug aut die andere binäre Klassifizierung,
- das Berechnen, für jedes zweite Mittel und für jedes Signalmuster, einer Erfolgsrate in Bezug auf ein Ergebnis, geliefert durch die zweiten Mittel und die betreffende Wahrscheinlichkeit,
- das Berechnen einer Gesamtergebnisses für das Trio, wobei die Erfolgsrate der beiden zweiten Klassifizierungsmittel zusammengenommen wird,
- das Vergleichen des Gesamtergebnisses des Trios mit einem Gesamtergebnis erwarteten Homogenität und Bestimmung eines Fehlers beim Messen der Lücken herrührend aus dieser Vergleichung,
- Minimierung des Fehlers durch Modifizierung der adaptiven Parameter der ersten Mittel und der der zweiten Mittel für die gesamte Menge von Beispielen.

3. Verfahren nach einem der Ansprüche 1 oder 2, dadurch gekennzeichnet, daß das Verfahren konjunktiv auf zwei Trios (L1, D1, D2) (L2, D3, D4) der Klassifizierungsmittel angewandt wird, wobei den zwei ersten binären Trennmitteln (L1, L2) ein einstweiliges binären Trennmittel (L0) vorhergeht zur Verteilung der Signalmuster über die zwei genannten ersten Mittel, wobei das einstweilige Mittel adaptive Parameter hat, wobei die Lernphase allgemein auf die genannten zwei Trios und das einstweilige Mittel angewandt wird, damit die Klssifizierungen die erwarteten Homogenitäten haben durch die Anpassung der an dem Ausgang der genannten zweiten Mittel zu unterscheidenden adaptiven Parameter.

4. Verfahren nach Anspruch 1, dadurch gekennzeichnet, daß die ersten binären Trennmittel Neuronen sind.

5. Verfahren nach Anspruch 1, dadurch gekennzeichnet, daß die zweiten Klassifizierungsmittel Radialbasisfunktionsklassifizierer, nächste-Nachbarklassifizier-er, oder Näherungsfunktionsklassifizierer sind.


## Claims

1. A method for the classification of signal patterns by successive dichotomies, comprising a learning phase which is performed on a batch of examples of signal patterns, said examples being classified by a trio of classification means or by a combination of several trios of classification means, said trio or each of said trios being formed by a first binary separation means (N1-N5) which is followed by two second classification means (C1-C6), said first means distributing signal patterns to the second classification means, the learning phase comprising the following steps:

   A- interactive calculation, for said trio or each of said trios of respective adaptive parameters of said first means and said second means so as to distinguish, at the output of said second means, two respective classifications by minimizing an error criterion,
   B- freezing the parameters of the first means when at least one of said second means does not provide a classification with an expected homogeneity, and replacing each second means which does not provide a homogeneous classification by an additional trio of classification means,
   C- repeating the above steps for each additional trio until all second classification means supply respective classifications with the expected homogeneities,
   D- freezing the respective parameters of all trios of classification means.

2. A method as claimed in Claim 1, characterized in that for the interactive calculation of the adaptive parameters of a said trio, the method comprises the following steps:

   - estimating, for each first means and for each signal pattern, a probability concerning one of the binary classifications and a complementary probability concerning the other binary classification,
   - calculating, for each second means and for each signal pattern, a success rate relating a result supplied by said second means and the relevant probability,
   - calculating an overall result for the trio, grouping the success rate of the two second classification means,
   - comparing the overall result of the trio with an overall result of expected homogeneity and determining an error measuring the gaps stemming from this comparison,
   - minimizing the error by modifying the adaptive parameters of the first means and those of the second means for the entire batch of examples.

3. A method as claimed in one of the Claims 1 or 2, characterized in that the method is applied conjunctively to two trios (L1, D1, D2) (L2, D3, D4) of classification means, the two first binary separation means (L1, L2) being preceded by a preliminary binary separation means (L0) for distributing the signal patterns to the two said first means, said preliminary means having adaptive parameters, the learning phase being applied generally to said two trios and to the preliminary means so as to enable classifications having the expected homogeneities due to adaptation of the adaptive parameters, to be distinguished at the output of said second means.

4. A method as claimed in Claim 1, characterized in that the first binary separation means are neurons.

5. A method as claimed in Claim 1, characterized in that the second classification means are radial base function classifiers, nearest-neighbour classifiers, or approximation function classifiers.

FIG.1

FIG. 2A

FIG. 2B

FIG. 3A

FIG. 3B

M

$N_1$

$M^+$    $M^-$

C1    $N_2$

$p^{-+}$

K1    C3    C4    $p^{--}$

$V^{-+}$    $V^{--}$

$p^{-+} \cdot V^{-+} + p^{--} \cdot V^{--}$

FIG.4

M

7

$L_0$

$p^+$    $p^-$

$L_1$    $L_2$

$p^{++}$    $p^{+-}$    $p^{-+}$    $p^{--}$

D1    D2    D3    D4

$V^{++}$    $V^{+-}$    $V^{-+}$    $V^{--}$

$p^+(p^{++} \cdot V^{++} + p^{+-} \cdot V^{+-}) + p^-(p^{-+} \cdot V^{-+} + p^{--} \cdot V^{--})$

FIG.5

FIG. 6A

FIG. 6B

**FIG.7**

**FIG.8**

**FIG.9**